# EUROPEAN PATENT APPLICATION

(11) **EP 1 069 738 A1**
(43) Date of publication of application: **17.01.2001**
(21) Application number: 99401788.7
(22) Date of filing: 16.07.1999
(51) Int. Cl.: H04L 12/64, H04L 12/66, H04Q 7/30, H04M 7/00

(54) **A gateway comprising transcoding means**

(71) Applicant: ALCATEL, 75008 Paris (FR)
(72) Inventor: Leroy, Suresh André Jean-Marie, 2970 Schilde (BE); De Vriendt, Johan André, 9051 Afsnee (BE)
(74) Representative: Plas, Axel

(57) **Abstract**

The present invention is related to a gateway that inter-works between a first telecommunication network and a second telecommunication network. The gateway comprises transcoding means to transform data represented according to a first encoding type used by the first network into the data represented according to a second encoding type used by the second network. The gateway furthermore comprises first transcoding free operation means to inter-operate with at least a second transcoding free operation means. In this way the gateway is enabled to optimize the use of encoding types during transportation of data from its source to its destination via this gateway.

## Description

The present invention relates to a gateway that comprises transcoding means as described in the preamble of claim 1 and a method to provide an optimal use of encoding types realized by said gateway as described in the preamble of claim 8.

Such gateways are well known in the technical field of telecommunication systems. Indeed, a gateway is a device for connecting two systems that use different transport protocols. A gateway has intelligence and acts as a communication controller and protocol converter. Gateways are e.g. used to connect a local area network to a mainframe host computer or a to a public packet switching network, or to connect dumb / limited intelligence terminals to the local area networks. In this way, a gateway inter-works between a first telecommunication network and a second telecommunication network.

Furthermore, it has to be remarked that a gateway might also perform transcoding. It has to be remarked that encoding refers to the class of signal transformations designed to improve communication performance by enabling the transmitted signals to better withstand the effects of various channel impairments, such as noise fading, and jamming. Moreover, dealing with modulation and coding is to attempt to obtain the basic system design goals i.e. to maximize data packet rate while simultaneously minimizing error probability and bandwidth, reducing the required bit energy to noise power spectral density and the complexity of the system. An operation that transforms data represented according to a predefined encoding type into the same data but represented according to another encoding type is called transcoding.

In this way, a gateway performs a transcoding operation in the event when a gateway transforms data that is represented according to a first encoding type that is used by the first network into the same data but represented according to a second encoding type that is used by the second network.

Such above mentioned gateways are for instance Voice over Internet Protocol VoIP gateways. Such a gateway is inter-working between a circuit switched telecommunication network i.e. 'voice' and an internet protocol network.

It has to be explained that Voice over IP VoIP is a technology that uses Internet Protocol for making voice calls. The internet protocol network is e.g. a public internet or a private internet network within a large company and the mobile networks is e.g. a global system for mobile communication networks or an universal mobile telephone standard network. Furthermore, it is clear that internet protocol technologies also influences the architecture and implementation of future mobile networks. Once the network supports VoIP, the way to multimedia over the Internet Protocol network is open.

The use of VoIP has some important advantage. One of the biggest advantages from the operator's point of view is the management of only one network for both data and voice and the lower cost of Information Technology equipment. Using packet switched networks for the transport of voice i.e. real-time data is also more efficient than circuit switched networks. In packet switched networks there is no fixed bandwidth per user, if there is no pending data the bandwidth can be used by other subscribers. Moreover in packet switched networks you are no longer restricted to the use of pulse code modulation codecs, you are free to use more performant codecs.

From the users point of view you have the advantage of lower communication costs. The user can choose between different providers instead of a few telecom operators. Furthermore, introduction of multimedia applications will be possible with the introduction of higher bandwidth and better Quality of Service in universal mobile telecommunication system UMTS.

Regarding only transcoding operations, it has to be explained that in such a VoIP network, with mobile terminals, transcoding is performed at different places during transportation of the data from its source to its destination.

The following paragraph describes the consecutive transcoding operations upon the data in the event of a communication between a first mobile terminal and a second mobile terminal via an IP network.

A first encoding operation is in fact performed by the first terminal when voice is coded into data that is represented according to a global system for mobile communication GSM encoding type being supported by the first terminal. Such a GSM encoding type is e.g. full rate FR encoding type described in the ITU/ETSI standard GSM-FR, half rate HR encoding type described in the ITU/ETSI standard GSM-HR or a newly defined encoding type for GSM and UMTS called Adaptive Multi Rate Codec, AMR Codec.

A first transcoding operation is e.g. performed when the data enters the core network being part of the mobile network. The data is transformed by a first transcoder of a Base Station Subsystem from data represented according to a predefined GSM encoding type into the data represented according to Pulse Code Modulation PCM encoding type.

A next transcoding operation is eventual performed by a transcoder of a VoIP ingress gateway that not only translates the data from one domain to another domain i.e. signaling, packetisation, ...from circuit switching into internet protocol packets, but also transforms the data represented according to PCM encoding type into data represented according to encoding types that are used by the IP network such as e.g. the encoding types described in the ITU / ETSI encoding speech codecs standards G.723.1 or G.729.A.

Furthermore, during propagation through the IP network the data might be transcoded also one or more times by intermediate gateways that are inter-working between different intermediate networks. Finally, the data is again transcoded from an IP encoding type into PCM encoding type by a transcoder of an egress VoIP gateway, and from PCM encoding type into a GSM encoding type by a second transcoder from a base station subsystem in a second mobile network, and from this GSM encoding type into sound by the second terminal.

It has to be remarked that due to these transcoding operations the speech quality of the communication gets worse and the transported data suffers from delays.

Now, it has to be explained that within a true digital cellular telecommunication system a tandem free operation is specified in order to avoid intermediate transcoding to PCM in mobile to mobile speech calls. This transcoding free operation is described in the two standards of European Telecommunication Standards Institute ETSI with reference GSM 02.53 V7.0.0 dated 1998-04 : Digital Cellular Telecommunication System (Phase 2+) / Tandem Free Operation / Service Description Stage 1 and GSM 03.53 V7.0.0 dated 1998-05 : Digital Cellular Telecommunication System (Phase 2+) / Tandem free Operation / Service Description Stage 2.

As described in the standards, the operation involves, after call establishment, firstly a negotiation phase i.e. an establishment mode wherein two transcoding free operation enabled transcoders are exchanging information regarding its used encoding types whilst performing its transcoding operation.

Indeed, in the event when a call is established in a mobile network between a first mobile terminal and a second mobile terminal the following transcoding operations are usually performed:
a first encoding operation is performed by the first terminal from voice to its supported GSM encoding type i.e. first GSM encoding type;
a first transcoding operation is performed by a first transcoder in the mobile network from this first GSM encoding type to PCM encoding type, hereafter
a second transcoding operation is performed by a second transcoder in the mobile network from this PCM encoding type to a second GSM encoding type that is supported by the second terminal; and finally
a last decoding operation is performed by the second terminal from this second GSM encoding type to voice.

In the event when the first GSM encoding type and the second GSM encoding type are identical and the first and second transcoders are enabled to establish a transcoding free operation, both transcoders eliminate its transcoding operation. Hereby the data undergoes only an encoding from voice to a predefined GSM encoding type and a decoding from this predefined GSM encoding type to voice. Furthermore it is described in the above mentioned standards that the inter-operation between both transcoders is executed by means of in-band signaling. This means that one or more predefined bits are stolen from the ordinary data transport format e.g. one out of 16 bits in the PCM samples is stolen.

Returning to the combined VoIP network, it has to be explained that in order to provide an efficient bandwidth use within the IP network, the ingress gateway buffers and encapsulates the consecutive data packets i.e. smaller PCM data packets, into internet protocol IP packets. These IP packets are transported through the IP network and are by the egress gateway de-encapsulated from the IP packets. These operations are improving the efficient use of the bandwidth over the IP network but are, however, providing a delay to the data. This delay of the data packets disturbs the transcoding free operation between the first transcoder from the first mobile network and the second transcoder from the second mobile network whereby elimination of the transcoding operation by the first transcoder and the second transcoder becomes impossible. Indeed, even when both transcoders are enabled with transcoding free operations and even when on both sides from the transcoders an identical predefined GSM encoding type is used, the transcoding free operation signaling is disturbed due to the delays at the ingress gateway and the egress gateway and an optimization of the encoding types becomes impossible.

An object of the present invention is to provide a gateway such as the above described gateways that is inter-working between a first telecommunication network and a second telecommunication network and that comprises transcoding means but that provides an optimal use of encoding types during transportation of data from its source to its destination via this gateway.

This object is achieved by the gateway of claim 1 that realizes the method of claim 8.

Indeed, by comprising in the gateway first transcoding free operation means to inter-operate with at least a second transcoding free operation means, a transcoding operation can be avoided. Even more, in the event when the gateway and the second transcoding free operation means are using on its outer side an identical encoding type, two transcoding operation steps are avoided. Hereby the transportation of the data from its source to its destination via this gateway involves less transcoding steps which furthermore improves the quality and the delay of the data.

In the event when, in a VoIP network application, the present invention is as well in the ingress gateway as in the egress gateway, implemented. The VoIP ingress gateway is enabled to inter-operate with the first transcoder in the first mobile network and the VoIP egress gateway is enabled to inter-operate with the second transcoder in the second mobile network. In this way due to negotiation between the first transcoding free operation means of the first transcoder and the transcoding free operation means of the gateway, a first transcoding operation at the first transcoder can be avoided. Even more, when e.g. the GSM encoding type supported by the first terminal is a first GSM encoding type and when the ingress gateway also usual performs a transcoding to this first GSM encoding type, transcoding by the gateway can also be avoided.

In a similar way can a transcoding operation be avoided at the second transcoder and can a further transcoding operation can be avoided at the egress gateway in the event when e.g. the GSM encoding type supported by the second terminal is a second GSM encoding type and the egress gateway also uses this second GSM encoding type.

In this way two times two transcoding operations are avoided which optimizes the use of encoding types whereby the speech quality improves and the delay of the transported data decreases. Such a gateway is described in claim 2 and claim 3.

As it is described above, the inter-operation can be realized by means of in-band signaling between the first transcoding free operation means and the second transcoding free operation means. This is described by claim 6.

A further characteristic feature of the present invention is described in claim 7 that realizes the inter-operation by means of a separate signaling between the first transcoding free operation means and the second transcoding free operation means.

A final characteristic feature of the present invention is that the transcoding free operation supports dynamic adaptation of encoding type. This is described in claim 5. Indeed, it seems clear that both sides have to agree on a predefined encoding type before they can use a tandem free operation. Two operators could have a mutual agreement on the use of a predefined encoding type. On the other hand, in the event when no identical encoding type is used at both sides e.g. at the first transcoder of the first mobile network and the ingress gateway according to the above mentioned VoIP network application, the gateway is enabled to change dynamically its used encoding type as long as it is supported further along in the internet protocol network.

It should be noticed that the term "comprising", used in the claim, should not be interpreted as being limitative to the means listed thereafter. Thus, the scope of the expression "a device comprising means A and B" should not be limited to devices consisting only of components A and B. It means that with respect to the present invention, the only relevant components of the device are A and B.

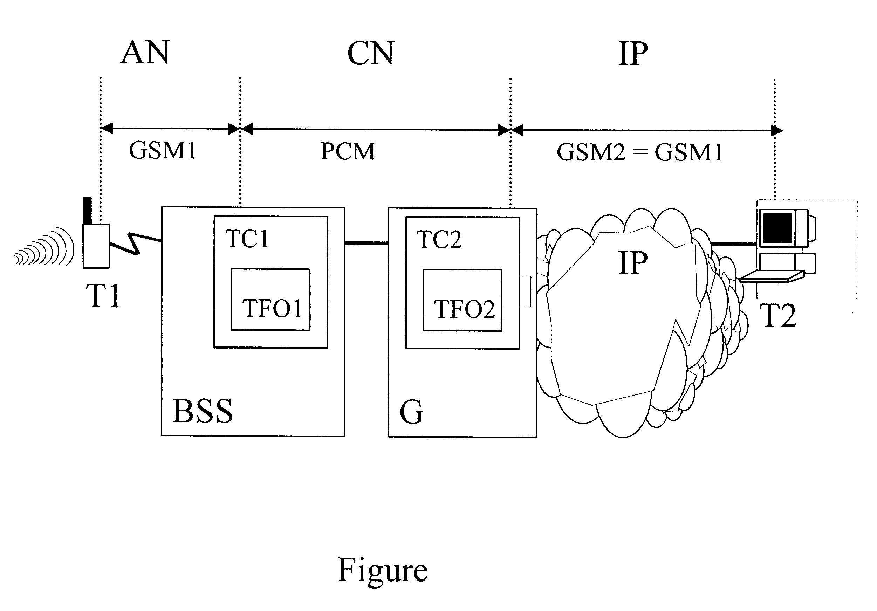

The above and other objects and features of the invention will become more apparent and the invention itself will be best understood by referring to the following description of an embodiment taken in conjunction with the accompanying Figure wherein a telecommunication network is shown.

Referring to the Figure a Voice over Internet Protocol network is shown. The mixed network comprises a mobile access network AN, shown at the left side of the figure, that is coupled to a core network CN of the mobile network that on its turn is coupled to an internet protocol network IP shown at the right side of the figure. The mobile network AN comprises a mobile terminal T1 and a base station system BSS. The mobile terminal T1 comprises an encoder (not shown) to transform voice into data represented according to a first GSM encoding type GSM1. The data is transmitted to the base station system BSS by means of radio signals. The base station system BSS receives the radio signals and, besides its traditional operations, transcodes the data represented according to the GSM1 encoding type into the data represented according to pulse code modulation encoding type PCM. This transcoding operation is performed by the transcoder TC1 included in the base station system BSS. The base station system BSS is coupled via the core network to the gateway G that provides access to the internet network IP.

The gateway G i.e. an ingress gateway comprises a second transcoder TC2 that transcodes the data represented according to the PCM encoding type into the data represented according to an encoding type that is supported by the IP network but also according to the encoding type that is supported by the destination terminal T2.

Terminal T2 is coupled to the internet protocol network IP and is implemented, according to this preferred embodiment, by a personal computer. It has to be remarked that an actual trend is to enable personal terminals to support mobile encoding types for reception of data. Presume that terminal T2 indeed supports an encoding type from the mobile world e.g. GSM2.

It has to be remarked that GSM1 and GSM2 are implemented by one of the above mentioned mobile encoding types. However, the exact type of GSM encoding type goes beyond the aim of the invention. The aim is, the use of one or another encoding types by a transcoder in order to transform data represented according to one encoding type into data represented according to another encoding type, and the support of one or another encoding type by the source terminal and the destination terminal.

In the event that terminal T2 supports GSM2 encoding type, the ingress gateway G transcodes the data, represented according to PCM, into data represented according to GSM2 encoding type and encapsulates the data, in this representation form, into an internet protocol packet for transportation via the IP network to the second terminal T2. Upon reception of the IP packets the second terminal T2 de-capsulates the data that is represented according to encoding type GSM2 from the IP packets. Finally the data is decoded by the second terminal T2 for further processing.

According to the above described situation in the event of transportation of data from the source terminal T1 to the destination terminal T2, the data is once encoded, two times transcoded and once decoded. A first transcoding operation is executed in the first transcoder TC1 from GSM1 encoding type to PCM encoding type and a second transcoding operation is executed in the second transcoder TC2 from PCM encoding type into GSM2 encoding type.

The transcoders TC1from the mobile network is a transcoder that is enabled to perform transcoding free operations. Therefor the transcoder TC1 includes a transcoding free operation means TFO1.

Furthermore, according to the present invention, in order to provide an optimal use of encoding types during transportation of the data from its source T1 to its destination T2 via the ingress gateway G, the gateway includes a transcoder free operation means TFO2.

When data is transported from one side to the other side both transcoding free operation means TFO1 and TFO2 are inter-working with each other for e.g. exchanging information regarding the used encoding types.

It is preferred for this embodiment to implement the signaling for both transcoding free operation means TFO1 and TFO2 according to in-band signaling. This means that during establishment mode, after call set-up, one bit out of 16 bits are extracted from the PCM samples in order to be used for signaling.

In the event when the first transcoding free operation means TFO1 and the second transcoding free operation means TFO2 agree upon a tandem free operation, a first transcoding operation is eliminated by the first transcoder TC1. Such an elimination phase is called the established mode.

In the event when the used encoding types are identical on both outer sides of the transcoders TC1 and TC2, the transcoding free operation means TFO1 and TFO2 at both sides are deciding to eliminate its transcoding operation. This double elimination is only possible for this preferred embodiment in the event when GSM1 encoding type is identical to GSM2 encoding type.

In order to explain the principle working of the invention it is presumed that the GSM1 encoding type is identical to the GSM2 encoding type.

It is preferred for this embodiment, that in the established mode, the PCM samples will be kept as fall back information. This means that when tandem free transportation of data is ongoing and e.g. a failure or a hand-over between base-station systems would occur, that the transcoded data is still available to rely upon. According to such an implementation data recovery is faster established.

Furthermore, when the first transcoding free operation means TFO1 agreed with the second transcoding free operation means TFO2 upon transcoding free operation i.e. established mode, no transcoding operation is executed by the first transcoder TC1. Even more, when GSM1 = GSM2 also the second transcoder TC2 performs no transcoding operation.

The base station system BSS only takes a GSM1 encoded data sample and transmits it to the VoIP gateway. These GSM1 encoded data samples are transported from the base station system BSS to the gateway as being part of a PCM sample. Two bits are stolen from the PCM sample and are replaced by a GSM1 encoded data sample.

Also the gateway is, regarding transcoding operations, transparent for the data. The gateway extract from the PCM sample the GSM1 encoded data sample and encapsulates this GSM1 encoded data sample in an IP packet. The IP packet is transmitted over the IP network to its destination i.e. the second terminal T2. Since the GSM1 encoding type is identical to the GSM2 encoding type and since the second terminal T2 supports GSM2 encoding type, the terminal T2 is able to decode the GSM1 encoded data samples for further processing.

Hereby, the transported data is only encoded and decoded at the terminals T1 and T2, respectively, and no transcoding operation is executed, which introduces less delay for the data and which provides a better speech quality.

It has to be remarked that although only a base station system BSS is described on the link between the first terminal T1 and the gateway G, it is evident to a person skilled in the art that other devices such as e.g. a mobile switching center must be included in this link from mobile terminal to ingress gateway. However, since the description of these devices is going beyond the aim of the invention, they are not mentioned in this present application.

It has to be remarked that although the present implementation describes, for the implementation of the in-band signaling, an extraction of only one bit from the PCM samples, it has to be understood that the invention is not restricted to applications like this. Indeed, small modifications, evident to a person skilled in the art, might be applied to the above described embodiment in order to implement an extraction of e.g. two bits or more in order to implement the in-band signaling.

It has to be remarked that although in order to explain the principle working of the invention, it is mentioned that terminal T1 is the source from the data and that terminal T2 is the destination for the data, it has to be understood that a communication is set-up and is going on between terminal T1 and terminal T2 and that the invention is not restricted to transportation of data in this direction. Indeed, small modifications, evident to a person skilled in the art, may be applied to the above described embodiment to adapt it to be used for transportation of data from terminal T2 to terminal T1, and to implement hereby the bi-directional aspect of a communication between both terminals T1 and T2.

While the principles of the invention have been described above in connection with specific apparatus, it is to be clearly understood that this description is made only by way of example and not as a limitation on the scope of the invention, as defined in the appended claims.

## Claims

1. A gateway inter-working between a first telecommunication network and a second telecommunication network, said gateway comprises transcoding means to transform data represented according to a first encoding type used by said first network into said data represented according to a second encoding type used by said second network, **characterized** in that said gateway further comprises first transcoding free operation means to inter-operate with at least a second transcoding free operation means.

2. The gateway according to claim 1, characterized in that said gateway is a voice over packet gateway.

3. The gateway according to any one of claim 1 and claim 2, characterized in that said gateway is a voice over internet protocol gateway.

4. The gateway according to any one of any previous claim, characterized in that said second transcoding free operation means is included in a second transcoding means that transforms said representation of said data from a mobile encoding type into a pulse code modulation.

5. The gateway according to any one of any previous claim, characterized in that said first transcoding free operation means and said second transcoding free operation means supports dynamic adaptation of encoding type.

6. The gateway according to any one of any previous claim, characterized in that said inter-operation is realized by means of in-band signaling between said first transcoding free operation means and said second transcoding free operation means.

7. The gateway according to any one of any previous claim, characterized in that said inter-operation is realized by means of separate signaling between said first transcoding free operation means and said second transcoding free operation means.

8. Method to provide an optimal use of encoding types during transportation of data from its source to its destination via a gateway, said method comprises inter-working by said gateway between a first telecommunication network and a second telecommunication network and transforming by a transcoding means of said gateway said data represented according to a first encoding type used by said first network into said data represented according to a second encoding type used by said second network, **characterized** in that said method further comprises the step of inter-operating by a first transcoding free operation means comprised in said gateway with at least a second transcoding free operation means in order to obtain said optimal use of encoding types.
